# EUROPEAN PATENT SPECIFICATION

(11) **EP 3 472 225 B1**
(45) Date of publication and mention of the grant of the patent: **30.09.2020**
(21) Application number: 17729149.9
(22) Date of filing: 14.06.2017
(51) Int. Cl.: C08G 69/40, C08G 18/48, C08G 18/60, C08G 18/76, C08G 69/44

(54) **POLYAMIDE DISPERSION IN POLYOL AND PREPARATION THEREOF**
POYAMIDDISPERSION IN POLYOL UND HERSTELLUNG DAVON
DISPERSION DE POLYAMIDE DANS LE POLYOL ET SON PROCÉDÉ DE PRÉPARATION

(30) Priority: 15.06.2016 EP 16174579
(43) Date of publication of application: 24.04.2019
(73) Proprietor: BASF SE, 67056 Ludwigshafen am Rhein (DE)
(72) Inventor: KOENIG, Christian, 67056 Ludwigshafen (DE); THIELBEER, Frank, 67056 Ludwigshafen (DE); OSTERMANN, Rainer, 45665 Recklinghausen (DE)
(86) International application number: PCT/EP2017/064501
(87) International publication number: WO 2017/216209

(56) References cited:
- US-A- 4 452 922
- US-A- 4 946 922

## Description

The invention relates to a process for preparing a polyamide dispersion in polyol, the polyamide dispersion in polyol thus obtained, the use of a polyether amine in the preparation of the polyamide dispersion in polyol, the use of the polyamide dispersion in polyol for preparing a polyurethane, a respective process and the polyurethane.

US 4,452,922 relates to polyamide co-polymer polyols made with diesters and diamines and polyurethanes therefrom. A polyamide co-polymer polyol is made by the reaction of a dicarboxylic acid diester with a diamine in the presence of a polyether polyol. The nylon formed is present in the polyol in an amount of from 1 to 30 wt%. The polyether polyol may have a molecular weight of about 2,000 to 8,000. The polyamide co-polymer polyol may be used in the manufacture of elastomers and flexible polyurethane foams which are characterized by good load bearing properties. According to the examples, diethyl oxalate was reacted with 1,6-hexamethylenediamine in a polyether triol. In a comparative example, polyoxypropylenediamine of about 230 molecular weight (JEFFAMINE® D-230) was employed. However, this resulting polyol phase separated. It is concluded that diamine that contains an ether linkage does not work well according to the invention of this patent.

Thus, from this reference, it can be concluded that polyether amines destabilized the polyamide particles formed.

US 4,503,193 relates to polymer dispersions and their uses. The polymer dispersions are prepared by the *in situ* polymerization of an ethylenically unsaturated monomer or mixture of monomers in a chain extender in the presence of a free radical polymerization initiator and a polyamide stabilizer. As a chain extender aliphatic and/or araliphatic diols are employed. The polyamide stabilizer is poly(N-vinyl-2-pyrrolidone) (PVP). According to the examples, 1,4-butanediol, PVP, acrylonitrile and styrene are reacted to form a polymer dispersion.

US 4,523,025 relates to polymer polyols from partially reacted polyamines. The polymer polyol is made by the reaction of a partially reacted polyamine with an organic polyisocyanate in a polyether polyol solvent of about 3,000 to 8,000 molecular weight. Preferably, the polyisocyanate is reacted with a partially alkoxylated polyoxyalkylenediamine. According to example 1, an ethylene oxide/propylene oxide adduct of polyoxypropylenediamine (JEFFAMINE® D-230) is prepared which is further reacted with a high reactivity glycerine-based triol (THANOL®SF-5505) and toluene diisocyanate. The resultant product was a white, opaque, viscous dispersion. The polyurea particles produced are dispersed in the polyol.

US 4,946,922 relates to internal mold release agents for polyisocyanurate systems. The active hydrogen compositions comprise an organic polyol having a molecular weight of from about 100 to about 4000 and a polyamide formed from the reaction of a C₂₋₃₀-aliphatic monocarboxylic acid and a relatively high molecular weight amine-terminated polyether. The polyamide is for example obtained by reaction of amine-terminated polyethers like Jeffamine D-2000 with a monocarboxylic acid. The amine-terminated polyether and the acid are reacted together in substantially equivalent proportions. According to example 7, listed in table I, Jeffamine D-2000, an aminated polypropylene oxyglycol with molecular and amine equivalent weights of about 2000 and 1000, respectively, is reacted with 0.33 equivalents oleic acid and 0.67 equivalents dodecanedioic acid. Thus, diamine and diacid are employed in a molar ratio of 1:0.67.

The object underlying the present invention is to provide a process for preparing a polyamide dispersion in polyol which leads to a stabilized dispersion which is stable and does not phase separate over a prolonged period of time.

Furthermore, a polyamide dispersion in polyol shall be provided which can be readily reacted with polyisocyanates to form polyurethanes, specifically polyurethane foams having an enhanced rigidity and higher thermal and chemical stability, especially against hydrolysis.

The object is achieved by a process for preparing a polyamide dispersion in polyol by reacting diamine and dicarboxylic acid components in a molar ratio of from 1.1:0.9 to 0.9:1.1 in a polyol component in a reactor, the diamine component containing 10 to 100 wt% of at least one polyetheramine which is a difunctional primary amine with a number average molecular weight (Mₙ) of from 500 to 5,000 g/mol, the polyol component having a number average molecular weight (Mₙ) of from 2,000 to 8,000 g/mol, wherein at most 80 wt% of the diamine component are provided in the reactor at the start of the reaction and at least 20 wt% of the diamine component are added stepwise or continuously to the reactor in the course of the reaction.

The object is furthermore achieved by a polyamide dispersion in polyol, obtainable by the above process.

The object is furthermore achieved by a polyamide dispersion in a polyol, wherein the polyamide is based on diamine and dicarboxylic acid components in a molar ratio of from 1.1:0.9 to 0.9:1.1, 10 to 100 wt% of the diamine component being at least one polyetheramine with a number average molecular weight (Mₙ) of from 500 to 5,000 g/mol.

The object is furthermore achieved by the use of a polyetheramine which is a difunctional primary amine with a number average molecular weight (Mₙ) of from 500 to 5,000 g/mol, as a reactive stabilizer for polyamides in the *in situ* polycondensation of dicarboxylic acids and diamines in a polyol.

The object is furthermore achieved by a process for preparing a polyurethane, comprising mixing a polyamide dispersion in polyol as defined above with polyisocyanates and, if appropriate, one or more of further compounds having hydrogen atoms which are reactive towards isocyanates, chain extenders and/or crosslinkers, catalysts, blowing agents and further additives, and reacting the mixture to form the polyurethane.

The object is furthermore achieved by a polyurethane, obtainable by the above process.

Contrary to the finding of US 4,452,922, it has been found according to the present invention that polyetheramines which are difunctional primary amines with a number average molecular weight (Mₙ) of from 500 to 5,000 g/mol stabilize the forming polyamide particles, when diamine components and dicarboxylic acid components are reacted in a polyol to form polyamides.

The stabilizing effect is specifically pronounced for polyether amines having a number average molecular weight (Mₙ) of from 1,000 to 3,000 g/mol, more preferably 1,500 to 2,500 g/mol, specifically about 2,000 g/mol.

By employing these higher molecular weight polyether amines homogeneous stable dispersions of polyamide particles in polyols can be formed. The polyether amine can be regarded as a reactive stabilizer, since it can react with the dicarboxylic acids to be part of the polyamide chain.

The at least one polyetheramine employed according to the present invention can form 10 to 100 wt% of the diamine component, preferably 20 to 80 wt%, more preferably 40 to 60 wt%, for examples about 50 wt% of the diamine component.

The number average molecular weight is preferably measured by GPC with polystyrene standards for all components employed according to the present invention, especially for the polyetheramine and the polyol component. Suitable solvents are m-cresol, if necessary admixed with dichloromethane or chlorobenzene or TMF.

The polyetheramine is a difunctional primary amine in which the two primary amino groups can be reacted with carboxylic acid groups of the dicarboxylic acid component to form an amide linkage.

Preferably, the two primary amino groups are in a terminal position, and the polyetheramine is characterized by repeating oxyethylene and/or oxypropylene units in the backbone. Preferably, this backbone is not branched but linear.

Apart from the repeating oxypropylene and/or oxyethylene units, the polyetheramines can contain a starter molecule on which the oxypropylene units and/or oxyethylene units are grafted.

Typical starter molecules can be difunctional alcohols or other difunctional compounds on which ethylene oxide and/or propylene oxide can be grafted.

Small amounts of polyether amines having a higher amine functionality may be employed together with the polyether amine which is a difunctional primary amine. Preferably, such higher polyetheramines can be trifunctional primary amines.

Preferably, not more than 5 wt%, based on the total polyetheramines employed, have more than two primary amine groups, more preferably not more than 1 wt%. Most preferably, the whole polyetherdiamine component consists of difunctional primary amines.

Typical structures of the polyetheramines can be those of JEFFAMINE® D-230 and D-403 polyetheramine with an adapted higher molecular weight. One example of a polyetheramine which can be employed according to the present invention is polyetheramine D 2000 (Baxxodur® EC 303) of BASF SE. This polyetheramine has a number average molecular weight of about 2,000 g/mol.

The oxypropylene units and oxyethylene units, if both are employed, can be employed alternately, in succession, or as mixture or blocks.

The polyetheramines employed according to the present invention can be obtained from e.g. BASF SE or can be prepared via amination of polyetherol with ammonia. The polyetherols can be obtained by polymerization of ethylene oxide or propylene oxide using for example KOH or DMC catalysts.

The diamine component employed according to the present invention contains 10 to 100 wt% of the at least one polyetheramine, more preferably 20 to 80 wt%, most preferably 40 to 60 wt%, for example about 50 wt%.

Diamine and dicarboxylic acid components can consist of one or more types of diamines and dicarboxylic acids, respectively. Thus, besides the polyetheramines described above, further diamines can be present in the diamine component.

It is important that diamine and dicarboxylic acid components are employed in a molar ratio of from 1.1:0.9 to 0.9:1.1, preferably from 1.05:0.95 to 0.95:1.05, more preferably approximately 1:1, i.e. approximately a stoichiometric ratio.

Dicarboxylic acids that can be used are alkanedicarboxylic acids having from 6 to 12, in particular from 6 to 10 carbon atoms, and aromatic dicarboxylic acids. Just a few acids that may be mentioned here are adipic acid, azelaic acid, sebacic acid, dodecanedioic acid and terephthalic and/or isophthalic acid.

Particularly suitable diamines are alkanediamines having from 6 to 12, in particular from 6 to 8, carbon atoms, and also m-xylylenediamine, di(4-aminophenyl)methane, di(4-aminocyclohexyl)methane, 2,2-di(4-aminophenyl)propane, 2,2-di(4-aminocyclohexyl)propane, or 1,5-diamino-2-methylpentane.

Examples are furthermore co-polyamides which additionally derive from lactams having from 7 to 13 ring members, for example caprolactam, caprylolactam, and laurolactam, in addition to the polyamides obtained via reaction of dicarboxylic acids with diamines.

Preferred polyamides are polyhexamethyleneadipamide, polyhexamethylenesebacamide, and also nylon-6/6,6 copolyamides, in particular having from 5 to 95% by weight content of caprolactam units.
Other suitable polyamides additionally contain units from ω-aminoalkyl nitriles, such as aminocapronitrile (PA 6) and adiponitrile with hexamethylenediamine (PA 66), by what is known as direct polymerization in the presence of water, as described by way of example in DE-A 10313681, EP-A 1198491, and EP 922065.

Mention may also be made of polyamides obtainable by way of example via condensation of 1,4-diaminobutane with adipic acid at an elevated temperature (nylon-4,6). Preparation processes for polyamides of said structure are described by way of example in EP-A 38 094, EP-A 38 582, and EP-A 39 524.

Other suitable polyamides are those obtainable via copolymerization of two or more of the abovementioned monomers, or a mixture of a plurality of polyamides, in any desired mixing ratio.

Semiaromatic copolyamides, such as PA 6/6T and PA 66/6T, have moreover proven suitable, the triamine content of these being less than 0.5% by weight, preferably less than 0.3% by weight (see EP-A 299 444 and EP-A 667 367).

Suitable copolyamides are composed of:
A1) from 20 to 90% by weight of units which derive from terephthalic acid and hexamethylenediamine,
A2) from 0 to 50% by weight of units which derive from ε-caprolactam, and
A3) from 0 to 80% by weight of units which derive from adipic acid and hexamethylenediamine,
A4) from 0 to 40% by weight of further polyamide-forming monomers, where the proportion of component (A2) or (A3) or (A4), or a mixture of these, is at least 10% by weight.

Component A1) comprises 20 to 90% by weight of units, which derive from terephthalic acid and hexamethylenediamine.

Alongside the units which derive from terephthalic acid and hexamethylenediamine, the copolyamides comprise, if appropriate, units which derive from ε-caprolactam, and/or units which derive from adipic acid and hexamethylenediamine, and/or units which derive from further polyamide-forming monomers.

Aromatic dicarboxylic acids A4) have from 8 to 16 carbon atoms. Examples of suitable aromatic dicarboxylic acids are isophthalic acid, substituted terephthalic and isophthalic acids, e.g. 3-tert-butylisophthalic acid, polynuclear dicarboxylic acids, e.g. 4,4'- and 3,3'-diphenyldicarboxylic acid, 4,4'- and 3,3'-diphenylmethanedicarboxylic acid, 4,4'- and 3,3'-diphenyl sulfone dicarboxylic acid, 1,4- or 2,6-naphthalenedicarboxylic acid, or phenoxyterephthalic acid, particular preference being given here to isophthalic acid.

Further polyamide-forming monomers A4) can derive from dicarboxylic acids having from 4 to 16 carbon atoms and from aliphatic or cycloaliphatic diamines having from 4 to 16 carbon atoms, or else from aminocarboxylic acids and, respectively, corresponding lactams having from 7 to 12 carbon atoms. Mention may be made of just a few suitable monomers of these types: suberic acid, azelaic acid, or sebacic acid as representatives of the aliphatic dicarboxylic acids, 1,4-butanediamine, 1,5-pentanediamine, piperazine, 4,4'-diaminodicyclohexylmethane, 2,2-(4,4'-diaminodicyclohexyl)propane, 3,3'-dimethyl-4,4'-diaminodicyclohexylmethane or metaxylylenediamine as representatives of the diamines, and caprylolactam, enanthlactam, ω-aminoundecanoic acid and laurolactam as representatives of lactams and, respectively, aminocarboxylic acids.

Polyamides of that kind are disclosed in DE-A-10 2009 011 668.

The following list, which is not comprehensive, comprises the polyamides A) mentioned and other polyamides for the purposes of the invention, and the monomers comprised.

### AA/BB polymers:

- PA 46: Tetramethylenediamine, adipic acid
- PA 66: Hexamethylenediamine, adipic acid
- PA 69: Hexamethylenediamine, azelaic acid
- PA 610: Hexamethylenediamine, sebacic acid
- PA 612: Hexamethylenediamine, decanedicarboxylic acid
- PA 613: Hexamethylenediamine, undecanedicarboxylic acid
- PA 1212: 1,12-Dodecanediamine, decanedicarboxylic acid
- PA 1313: 1,13-Diaminotridecane, undecanedicarboxylic acid
- PA 6T: Hexamethylenediamine, terephthalic acid
- PA MXD6: m-Xylylenediamine, adipic acid

### additional comonomers of:

- PA 4: Pyrrolidone
- PA 6: ε-Caprolactam
- PA 7: Ethanolactam
- PA 8: Caprylolactam
- PA 9: 9-Aminopelargonic acid
- PA 11 11: -Aminoundecanoic acid
- PA 12: Laurolactam

### AA/BB polymers

- PA 61: Hexamethylenediamine, isophthalic acid
- PA 6-3-T: Trimethylhexamethylenediamine, terephthalic acid
- PA 6/6T: (see PA 6 and PA 6T)
- PA 6/66: (see PA 6 and PA 66)
- PA 6/12: (see PA 6 and PA 12)
- PA 66/6/610: (see PA 66, PA 6 and PA 610)
- PA 6I/6T: (see PA 61 and PA 6T)
- PA PACM 12: Diaminodicyclohexylmethane, laurolactam

- PA 6I/6T/PACMT: as PA 6I/6T + diaminodicyclohexylmethane, terephthalic acid
- PA 6T/6I/MACMT: as PA 6I/6T + dimethyldiaminocyclohexylmethane, terephthalic acid
- PA 6T/6I/MXDT: as PA 6I/6T + m-xylylenediamine, terephthalic acid
- PA 12/MACMI: Laurolactam, dimethyldiaminodicyclohexylmethane, isophthalic acid
- PA 12/MACMT: Laurolactam, dimethyldiaminodicyclohexylmethane, terephthalic acid
- PA PDA-T: Phenylenediamine, terephthalic acid.

The molecular weight of the polyamides can be such that the intrinsic viscosity of the polyamides is generally from 90 to 350 ml/g, preferably from 110 to 240 ml/g, determined in 0.5% strength by weight solution in 96% strength by weight sulfuric acid at 25 °C to ISO 307.

Semicrystalline or amorphous resins whose molecular weight (weight-average) is at least 5,000 are preferred, examples being those described in the US patents 2 071 250, 2 071 251, 2 130 523, 2 130 948, 2 241 322, 2 312 966, 2 512 606, and 3 393 210.

Most preferably, adipic acid is employed as dicarboxylic acid. Furthermore, most preferably, hexamethylenediamine is employed as the additional diamine component besides the polyetheramine. It is also preferred that no additional diamine component is employed besides the polyethamine.

The polyol component employed to the present invention has a number average molecular weight (Mₙ) of from 2,000 to 8,000 g/mol, preferably 3,000 to 7,000 g/mol, most preferably 4,000 to 6,000 g/mol, for example around 5,000 g/mol.

The polyol component according to the present invention can be composed of one or more different polyols. The polyol can be for example a polyester polyol or more preferably a polyetherol. Also polymer-modified polyols can be employed. Suitable polyols are disclosed e.g. in WO 2013/030173, specifically on pages 7 to 8. Most preferred are polyetherols.

Polyetherols are prepared by known methods, for example from one or more alkylene oxides having from 2 to 4 carbon atoms in the alkylene radical by anionic polymerization using alkali metal hydroxides or alkali metal alkoxides as catalysts with addition of at least one starter molecule comprising 2 or 3 reactive hydrogen atoms in bound form or by cationic polymerization using Lewis acids such as antimony pentachloride or boron fluoride etherate. Suitable alkylene oxides are, for example, tetrahydrofuran, 1,3-propylene oxide, 1,2- or 2,3-butylene oxide and preferably ethylene oxide and 1,2-propylene oxide. Furthermore, multimetal cyanide compounds, known as DMC catalysts, can also be used as catalysts. The alkylene oxides can be used individually, alternately in succession or as mixtures. Preference is given to mixtures of 1,2-propylene oxide and ethylene oxide, with the ethylene oxide being used in amounts of from 10 to 50% as ethylene oxide end block ("EO cap"), so that the polyols formed have more than 70% primary OH end groups.

Possible starter molecules are water or 2- and 3-functional alcohols such as ethylene glycol, 1,2- and 1,3-propanediol, diethylene glycol, dipropylene glycol, 1,4-butanediol, glycerol or trimethylolpropane. Further possible starters are 4- to 8-functional alcohols, like sugars, sorbitol or pentaerythritol.

Preferably, the polyol is a polyetherol prepared from at least one starter molecule, comprising 2 to 8 reactive hydrogen atoms and one or more alkylene oxides having from 2 to 4 carbon atoms in the alkylene radical.

The polyether polyols, preferably polyoxypropylene-polyoxyethylene polyols, have a functionality of from 2 to 3.

Polyester polyols can be prepared, for example, from organic dicarboxylic acids having from 2 to 12 carbon atoms, preferably aliphatic dicarboxylic acids having from 4 to 6 carbon atoms, and polyhydric alcohols, preferably diols, having from 2 to 12 carbon atoms, preferably from 2 to 6 carbon atoms. Examples of possible dicarboxylic acids are: succinic acid, glutaric acid, adipic acid, suberic acid, azelaic acid, sebacic acid, decanedicarboxylic acid, maleic acid, fumaric acid, phthalic acid, isophthalic acid and terephthalic acid. The dicarboxylic acids can be used either individually or in admixture with one another. In place of the free dicarboxylic acids, it is possible to use the corresponding dicarboxylic acid derivatives, e.g. dicarboxylic esters of alcohols having from 1 to 4 carbon atoms or dicarboxylic anhydrides. Preference is given to using dicarboxylic acid mixtures of succinic, glutaric and adipic acids in weight ratios of, for example, 20-35:35-50:20-32, and in particular adipic acid. Examples of dihydric and polyhydric alcohols, in particular diols, are: ethanediol, diethylene glycol, 1,2- or 1,3-propanediol, dipropylene glycol, 1,4-butanediol, 1,5-pentanediol, 1,6-hexanediol, 1,10-decanediol, glycerol and trimethylolpropane. Preference is given to using ethanediol, diethylene glycol, 1,4-butanediol, 1,5-pentanediol and 1,6-hexanediol. It is also possible to use polyester polyols derived from lactones, e.g. ε-caprolactone, or hydroxycarboxylic acids, e.g. ω-hydroxycaproic acid.

To prepare the polyester polyols, the organic, e.g. aromatic and preferably aliphatic, polycarboxylic acids and/or derivatives and polyhydric alcohols can be polycondensed in the absence of catalysts or preferably in the presence of esterification catalysts, advantageously in an atmosphere of inert gas, e.g. nitrogen, carbon monoxide, helium, argon, in the melt at temperatures of from 150 to 250 °C, preferably from 180 to 220 °C, if appropriate under reduced pressure, to the desired acid number which is preferably less than 10, particularly preferably less than 2. In a preferred embodiment, the esterification mixture is polycondensed at the abovementioned temperatures to an acid number of from 80 to 30, preferably from 40 to 30, under atmospheric pressure and subsequently under a pressure of less than 500 mbar, preferably from 50 to 150 mbar. Possible esterification catalysts are, for example, iron, cadmium, cobalt, lead, zinc, antimony, magnesium, titanium and tin catalysts in the form of metals, metal oxides or metal salts. However, the polycondensation can also be carried out in the liquid phase in the presence of diluents and/or entrainers, e.g. benzene, toluene, xylene or chlorobenzene, to azeotropically distill off the water of condensation. To prepare the polyester polyols, the organic polycarboxylic acids and/or derivatives and polyhydric alcohols are advantageously polycondensed in a molar ratio of 1:1-1.8, preferably 1:1.05-1.2.

The polyester polyols obtained preferably have a functionality of from 2 to 4, in particular from 2 to 3.

It is possible to use mixtures comprising polyetherols and polyesterols.

Further suitable polyols are polymer-modified polyols, preferably polymer-modified polyesterols or polyetherols, particularly preferably graft polyethers or graft polyesterols, in particular graft polyetherols. These are polymer polyols which usually have a content of preferably thermoplastic polymers of from 5 to 60% by weight, preferably from 10 to 55% by weight, particularly preferably from 30 to 55% by weight and in particular from 40 to 50% by weight. These polymer polyesterols are described, for example, in WO 05/098763 and EP-A-250 351 and are usually prepared by free-radical polymerization of suitable olefinic monomers, for example styrene, acrylonitrile, (meth)acrylates, (meth)acrylic acid and/or acrylamide, in a polyesterol serving as graft base. The side chains are generally formed by transfer of free radicals from growing polymer chains to polyesterols or polyetherols. The polymer polyol comprises, apart from the graft co-polymer, predominantly the homopolymers of the olefins dispersed in unchanged polyesterol or polyetherol.

In a preferred embodiment, acrylonitrile, styrene, acrylonitrile and styrene, particularly preferably exclusively styrene, are used as monomers. The monomers are polymerized, if appropriate in the presence of further monomers, a macromer, a moderator and a free-radical initiator, usually azo or peroxide compounds, in a polyesterol or polyetherol as continuous phase. This process is described, for example, in DE 111 394, U.S. Pat. No. 3,304,273, U.S. Pat. No. 3,383,351, U.S. Pat. No. 3,523,093, DE 1 152 536 and DE 1 152 537.

During the free-radical polymerization, the macromers are incorporated into the copolymer chain. This results in formation of block copolymers which have a polyester or polyether block and a poly-acrylonitrile-styrene block and act as phase compatibilizers at the interface of continuous phase and disperse phase and suppress agglomeration of the polymer polyesterol particles. The proportion of macromers is usually from 1 to 20% by weight, based on the total weight of the monomers used for preparing the polymer polyol.

If polymer polyol is comprised in the polyol component, it is preferably present together with further polyols, for example polyetherols, polyesterols or mixtures of polyetherols and polyesterols. The proportion of polymer polyol is particularly preferably greater than 5% by weight, based on the total weight of the polyol component. The polymer polyols can be comprised in an amount of, for example, from 7 to 90% by weight or from 11 to 80% by weight, based on the total weight of the polyol component. The polymer polyol is particularly preferably a polymer polyesterol or polymer polyetherol.

Preferably, the amount of the polyol component is 20 to 80 wt%, more preferably 30 to 70 wt%, most preferably 40 to 60 wt%, for example, approximately 50 wt%, based on the sum of diamine and diacid components and polyol component.

The polyamide dispersion in polyol according to the present invention is prepared by reacting diamine and dicarboxylic acid components in the polyol component in a reactor. At most 80 wt%, more preferably at most 60 wt%, most preferably at most 50 wt% of the diamine component are provided in the reactor at the start of the reaction, and at least 20 wt%, more preferably at least 40 wt%, most preferably at least 50 wt% of the diamine component, are added stepwise (gradually or continuously) to the reactor in the course of the reaction. Thus, only part of the diamine components is present in the reaction mixture at the start of the reaction, and the remainder of the diamine component is added continuously or in intervals as the reaction proceeds.

Preferably, the diamine component contains 20 to 80 wt%, more preferably 40 to 60 wt%, most preferably approximately 50 wt% of the at least one polyetheramine and 20 to 80 wt%, more preferably 40 to 60 wt%, most preferably approximately 50 wt% of one or more diamine(s) different therefrom, at least part of which are added to the reactor after the at least one polyetheramine.

If only polyetheramine is employed as the diamine component, part of the polyetheramine is added stepwise or continuously to the reactor in the course of the reaction, as indicated above. If, however, a significant amounts of other diamines are employed, it is preferable to provide the polyetheramine in the reactor and add the other diamines stepwise or continuously to the reactor in the course of the reaction, or to provide part of the different diamines in the reactor alongside with the polyetheramines and add the remainder of the other diamines stepwise or continuously in the course of the reaction.

This enables the polyetheramine to function as a stabilizer for the forming polyamide in the best manner.

The dicarboxylic acid component can be provided in the reactor at the start of the reaction, which is preferred. It is also possible to provide only part of the dicarboxylic acid component in the reactor at the start of the reaction and to add the remainder of the dicarboxylic acid component stepwise or continuously in the course of the reaction, for example alongside with the addition or administration of the diamine component.

The reaction of diamine and dicarboxylic acid components is preferably performed at a temperature in the range of from 200 to 300 °C, more preferably 220 to 280 °C, most preferably 230 to 250 °C. The reaction can be performed in an inert gas atmosphere. It is preferred to perform the reaction under stirring. After the addition of the diamine component, it is preferred to continue stirring at the reaction temperature for some time to bring the reaction to an end. Afterwards, the reaction mixture is cooled down and remains stable over weeks at room temperature.

The invention also relates to a polyamide dispersion in a polyol, wherein the polyamide is based on diamine and dicarboxylic acid components, 10 to 100 wt% of the diamine component being at least one polyetheramine with a number average molecular weight (Mₙ) of from 500 to 5,000 g/mol.

The further features of the polyamide dispersion can be as defined above. Preferably, the polyol component has a number average molecular weight (Mₙ) of from 2,000 to 8,000 g/mol.

The invention also relates to the use of the polyetheramine as defined above as a reactive stabilizer for polyamides in the *in situ* polycondensation of dicarboxylic acids and diamines in a polyol. For this use, it is preferred that the polyetheramine is provided in the reactor at the start of the reaction, so that the stabilizing effect can be achieved from the start of the reaction.

The polyamide dispersion in polyol as described above can be employed for preparing a polyurethane, preferably a polyurethane foam.

Typically, a process for preparing a polyurethane comprises mixing a polyamide dispersion in polyol as defined above with polyisocyanates and, if appropriate, one or more or further compounds having hydrogen atoms which are reactive towards isocyanates, chain extenders and/or crosslinkers, catalysts, blowing agents and further additives, and reacting the mixture to form the polyurethane.

Preferably, the polyurethane is a polyurethane foam and the mixture comprises blowing agents. Typically, the mixture contains catalysts and crosslinkers in order to achieve stable foams.

Polyurethanes are formed by reaction of polyisocyanates with compounds having hydrogen atoms which are reactive towards isocyanates. Part of these latter compounds are the polyamide dispersions in polyol. The polyamide dispersion in polyol preferably forms 5 to 90 wt%, more preferably 7 to 70 wt%, most preferably 10 to 50 wt% of the sum of all polyols, catalysts and crosslinkers employed in the polyurethane forming reaction.

Not only the polyols in the dispersion according to the present invention are reactive towards the polyisocyanates, but also the amino groups of the polyamide. Thus, a combination polyurethane is formed in which the polyisocyanates are also reacted with the polyamides, and, if still present apart from the polyamides also with the polyetheramines.

The, preferably thermoplastic, polyurethane is preferably prepared according to the present invention by reacting isocyanates with compounds which are reactive towards isocyanates and have a molecular weight of from 500 to 10,000 and, if appropriate, chain extenders having a molecular weight of from 50 to 499, if appropriate, in the presence of catalysts and/or customary auxiliaries and/or additives.

As organic isocyanates, it is possible to use generally known aliphatic, cycloaliphatic, araliphatic and/or aromatic isocyanates, preferably diisocyanates, for example trimethylene, tetramethylene, pentamethylene, hexamethylene, heptamethylene and/or octamethylene diisocyanate, 2-methylpentamethylene 1,5-diisocyanate, 2-ethylbutylene 1,4-diisocyanate, pentamethylene 1,5-diisocyanate, butylene 1,4-diisocyanate, 1-isocyanato-3,3,5-trimethyl-5-isocyanatomethylcyclohexane (isophorone diisocyanate, IPDI), 1,4- and/or 1,3-bis(isocyanatomethyl)cyclohexane (HXDI), cyclohexane 1,4-diisocyanate, 1-methylcyclohexane 2,4- and/or 2,6-diisocyanate and/or dicyclohexylmethane 4,4'-, 2,4'- and 2,2'-diisocyanate, diphenylmethane 2,2'-, 2,4'- and/or 4,4'-diisocyanate (MDI), naphthylene 1,5-diisocyanate (NDI), tolylene 2,4- and/or 2,6-diisocyanate (TDI), diphenylmethane diisocyanate, 3,3'-dimethylbiphenyl diisocyanate, 1,2-diphenylethane diisocyanate and/or phenylene diisocyanate.

As compounds which are reactive toward isocyanates apart from the polyamide dispersion in polyol, it is possible to use the generally known compounds which are reactive toward isocyanates, for example polyesterols, polyetherols and/or polycarbonate diols, which are usually referred to collectively as "polyols", having number average molecular weights (Mₙ) of from 500 to 8,000 g/mol, preferably from 600 to 6,000 g/mol, in particular from 800 to 4,000 g/mol, and preferably a mean functionality of from 1.8 to 2.3, preferably from 1.9 to 2.2, in particular 2, and mixtures thereof.

In a particularly preferred embodiment, the compound which is reactive toward isocyanates is a polytetrahydrofuran having a number average molecular weight of from 600 to 2,500 g/mol.

In a further particularly preferred embodiment, the compound which is reactive toward isocyanates is a polyester alcohol, preferably polyester diol, preferably one based on adipic acid and 1,4-butanediol, having a number average molecular weight of from 500 to 2,500 g/mol, particularly preferably from 600 g/mol to 900 g/mol.

As chain extenders, it is possible to use generally known aliphatic, araliphatic, aromatic and/or cycloaliphatic compounds having a molecular weight of from 50 to 499, preferably 2-functional compounds, for example diamines and/or alkanediols having from 2 to 10 carbon atoms in the alkylene radical, in particular 1,4-butanediol, 1,6-hexanediol and/or dialkylene, trialkylene, tetraalkylene, pentaalkylene, hexaalkylene, heptaalkylene, octaalkylene, nonaalkylene and/or decaalkylene glycols having from 3 to 8 carbon atoms, preferably corresponding oligopropylene glycols and/or polypropyleneglycols, with mixtures of the chain extenders also being able to be used.

As suitable catalysts which, in particular, accelerate the reaction between the NCO groups of the diisocyanates and the hydroxyl groups of the formative components and, it is possible to use the tertiary amines which are known and customary in the prior art, e.g. triethylamine, dimethylcyclohexylamine, N-methylmorpholine, N,N'-dimethylpiperazine, 2-(dimethylaminoethoxy)ethanol and diazabicyclo[2.2.2]octane, and also, in particular, organic metal compounds such as titanic esters, iron compounds such as iron(III) acetylacetonate, tin compounds, e.g. tin diacetate, tin dioctoate, tin dilaurate or the dialkyltin salts of aliphatic carboxylic acids, e.g. dibutyltin diacetate or dibutyltin dilaurate. The catalysts are usually used in amounts of from 0.0001 to 0.1 part by weight per 100 parts by weight of polyhydroxyl compound.

Apart from catalysts, customary auxiliaries and/or additives can also be added to the formative components. Examples which may be mentioned are blowing agents, surface-active substances, fillers, flame retardants, nucleating agents, oxidation stabilizers, lubricants and mold release agents, dyes and pigments, if appropriate further stabilizers in addition to the stabilizer mixtures used according to the invention, e.g. stabilizers against hydrolysis, light, heat or discoloration, inorganic and/or organic fillers, reinforcing materials and plasticizers.

It is also possible to use chain regulators, usually ones having a molecular weight of from 31 to 499 g/mol. Such chain regulators are compounds which have only one functional group which is reactive toward isocyanates, e.g. monofunctional alcohols, monofunctional amines and/or monofunctional polyols. Such chain regulators enable a particular flow behavior to be set in a targeted manner, particularly in the case of TPUs. Chain regulators can generally be used in an amount of from 0 to 5 parts by weight, preferably from 0.1 to 1 part by weight, based on 100 parts by weight of the component reactive to isocyanate.

The reaction can be carried out at customary indexes, preferably at an index of from 60 to 120, particularly preferably at an index of from 80 to 110. The index is defined as the ratio of the total isocyanate groups of the component used in the reaction to the groups which are reactive toward isocyanates, i.e. the active hydrogens. At an index of 100, there is one active hydrogen atom, i.e. one group which is reactive toward isocyanates present per isocyanate group of the component. At indexes below 100, more isocyanate groups than OH groups are present.

For the formation of the polyurethane foams and further possible ingredients, like TPU pellets and expandable particles, reference can be made to US 2010/0047550.

For example, blowing agents are disclosed in this reference in section [0070]. Further catalysts are disclosed in sections [0068] and [0069]. Hollow microspheres comprising physical blowing agents are disclosed in sections [0072] to [0074]. Possible surface-active substances, mold release agents and fillers are released in sections [0076] to [0079] of this reference.

The invention is further illustrated by the following examples.

### Examples

### Example 1 (amine added dropwise and stoichiometric)

6.9 g (47 mmol) adipic acid and 400 g of a trifunctional highly active polyether polyol having primary hydroxyl end groups based on glycerine and PO/EO blocks with 14 wt% EO blocks (Lupranol® of BASF SE) were provided in a 2.5 I glass reactor. After purging the reactor with nitrogen, the contents were heated to 240 °C under stirring and a constant nitrogen flow. After reaching the reaction temperature, 93 g (47 mmol) of a polyetheramine (difunctional primary amine) having a number average molecular weight of approximately 2,000 g/mol (Baxxodur® EC 303 of BASF SE) were added via a dropping funnel. After ending the addition of Baxxodur® EC 303, the reaction mixture was maintained at 240 °C for additional 15 minutes. Subsequently, the reaction mixture was cooled to 80 °C. A clear solution was obtained which remained homogeneous after weeks of storage.

### Example 2 (Baxxodur® and hexamethylenediamine as amino components)

12.1 g (83 mmol) adipic acid, 83.0 g (41 mmol) Baxxodur® EC 303 and 400 g Lupranol® were provided in a 2.5 l glass reactor. After purging the reactor with nitrogen, the contents were heated to 180 °C with stirring and a constant nitrogen flow. After reaching the reaction temperature, 4.8 g (41 mmol) hexamethylenediamine were added dropwise with a dropping funnel. After adding the hexamethylenediamine, the reaction mixture was maintained for additional 30 minutes at 180 °C. Subsequently, the reaction mixture was cooled to 80 °C. The product was stable over weeks.

### Comparative example 3 (all reactants were provided in the reactor)

6.9 g (47 mmol) adipic acid, 93 g (47 mmol) Baxxodur® EC 303 and 400 g Lupranol® were provided in a 2.5 l glass reactor. After purging the reactor with nitrogen, the reactor ingredients were heated to 240 °C under stirring and a constant nitrogen flow. After reaching the reaction temperature, the mixture was maintained for additional 30 minutes at 240 °C. Subsequently, the reaction mixture was cooled to 80 °C. A solution was obtained which showed a phase separation after several days. The product had a viscosity of 1,398 mPa·s (25 °C).

### Comparative example 4 (non-stoichiometric)

6.6 g (45 mmol) adipic acid and 400 g Lupranol® were provided in a 2.5 l glass reactor. After purging the reactor with nitrogen, the mixture was heated to 240 °C with stirring and a constant nitrogen flow. After reaching the reaction temperature, a mixture of 2.64 g (23 mmol) hexamethylenediamine and 91 g (45 mmol) Baxxodur® EC 303 were added slowly and dropwise with a dropping funnel. Afterwards, the reaction mixture was maintained at 240 °C for additional 15 minutes. Subsequently, the reaction mixture was cooled to 80 °C. A solution was obtained which showed phase separation after several days. The product had a viscosity of 1,206 mPa·s (25 °C).

### Testing in flexible foams

A polyol component was prepared by mixing various amount of the polyol from Example 1 with other polyols, catalysts and additives as indicated in the following table (parts by weight). The polyol component was manually mixed with the appropriate amount of a MDI blend (NCO value of 32.8%) to achieve an isocyanate index of 95 and poured into a mold where it cured to form a flexible foam.

The density was measured according to DIN EN ISO 845, the compressive strength according to DIN EN ISO 3386-1.

| Component | Type | Hydroxyl number | Comp. Example | Example A | Example B |
|---|---|---|---|---|---|
| Polyol Ex.1 | See above | | | 25 | 40 |
| Polyol A | Polyether | 28 mg KOH/g | 95 | 70 | 55 |
| Polyol B | Polyether | 41 mg KOH/g | 3.0 | 3.0 | 3.0 |
| Catalyst 1 | Amine catalyst | | 0.2 | 0.2 | 0.2 |
| Catalyst 2 | Amine catalyst | | 0.65 | 0.65 | 0.65 |
| Stabilizer 1 | | | 0.5 | 0.5 | 0.5 |
| Stabilizer 2 | | | 0.1 | 0.2 | 0.1 |
| Water | | | 3.0 | 3.0 | 3.0 |
| | | | | | |
| Properties | | | | | |
| Start time / s | | | 14 | 14 | 14 |
| Density / g/L | | | 49.4 | 50.4 | 48.9 |
| Compressive Strength / kPa | | | 4.3 | 6.7 | 8.2 |

| | | | | | |
|---|---|---|---|---|---|
| Catalyst 1 is a 33 wt% solution of triethylene diamine in dipropylene glycol. Catalyst 2 is N,N,N'-trimethyl-N'-hydroxyethyl bisaminoethyl ether. Stabilizer 1 is a silicone surfactant. Stabilizer 2 is a silicone stabilizer. | | | | | |

## Claims

1. A process for preparing a polyamide dispersion in polyol by reacting diamine and dicarboxylic acid components in a molar ratio of from 1.1:0.9 to 0.9:1.1 in a polyol component in a reactor, the diamine component containing 10 to 100 wt% of at least one polyetheramine which is a difunctional primary amine with a number average molecular weight (Mₙ) of from 500 to 5,000 g/mol, the polyol component having a number average molecular weight (Mₙ) of from 2,000 to 8,000 g/mol, wherein at most 80 wt% of the diamine component are provided in the reactor at the start of the reaction and at least 20 wt% of the diamine component are added stepwise or continuously to the reactor in the course of the reaction.

2. The process of claim 1, wherein the diamine component contains 20 to 80 wt% of the at least one polyetheramine and 20 to 80 wt% of one or more diamines different therefrom, at least part of which are added to the reactor after the at least one polyetheramine.

3. The process of claim 1 or 2, wherein the amount of the polyol component is 20 to 80 wt%, based on the sum of diamine and diacid components and polyol components.

4. The process of one of claims 1 to 3, wherein the polyetheramine is **characterized by** repeating oxyethylene and/or oxypropylene units in the backbone, and by terminal primary amino groups.

5. The process of one of claims 1 to 4, wherein the polyol is a polyetherol prepared from at least one starter molecule comprising 2 to 8 reactive hydrogen atoms and one or more alkylene oxides having from 2 to 4 carbon atoms in the alkylene radical.

6. The process of one of claims 1 to 5, wherein the dicarboxylic acid component is provided in the reactor at the start of the reaction.

7. A polyamide dispersion in a polyol, obtainable by the process of one of claims 1 to 6.

8. A polyamide dispersion in a polyol, wherein the polyamide is based on diamine and dicarboxylic acid components in a molar ratio of from 1.1:0.9 to 0.9:1.1, 10 to 100 wt% of the diamine component being at least one polyetheramine with a number average molecular weight (Mₙ) of from 500 to 5,000 g/mol.

9. The polyamide dispersion of claim 8, wherein the polyol component has a number average molecular weight (Mₙ) of from 2,000 to 8,000 g/mol.

10. The polyamide dispersion of one of claims 7 to 9, wherein the amount of polyol component is 20 to 80 wt.%, based on the sum of diamine and diacid components and polyol component.

11. The use of a polyetheramine which is a difunctional primary amine with a number average molecular weight (Mₙ) of from 500 to 5,000 g/mol, as a reactive stabilizer for polyamides in the *in situ* polycondensation of dicarboxylic acids and diamines in a polyol.

12. The use of a polyamide dispersion in polyol of one of claims 7 to 10 for preparing a polyurethane.

13. A process for preparing a polyurethane, comprising mixing a polyamide dispersion in polyol of one of claims 7 to 10 or prepared by the process of one of claims 1 to 6 with polyisocyanates and, if appropriate, one or more of further compounds having hydrogen atoms which are reactive towards isocyanates, chain extenders and/or crosslinkers, catalysts, blowing agents and further additives, and reacting the mixture to form the polyurethane.

14. The process of claim 13, wherein the polyurethane is a polyurethane foam and the mixture comprises blowing agents.

15. A polyurethane, obtainable by the process of claims 13 or 14.

## Patentansprüche

1. Verfahren zur Herstellung einer Polyamiddispersion in Polyol durch Umsetzen von Diamin- und Dicarbonsäurekomponenten mit einem Molverhältnis von 1,1:0,9 bis 0,9:1,1 in einer Polyolkomponente in einem Reaktor, wobei die Diaminkomponente 10 bis 100 Gew.-% mindestens eines Polyetheramins, bei dem es sich um ein difunktionelles primäres Amin mit einem zahlenmittleren Molekulargewicht (Mₙ) von 500 bis 5.000 g/mol handelt, enthält, wobei die Polyolkomponente ein zahlenmittleres Molekulargewicht (Mₙ) von 2.000 bis 8.000 g/mol aufweist, wobei höchtens 80 Gew.-% der Diaminkomponente zu Beginn der Reaktion in dem Reaktor bereitgestellt werden und mindestens 20 Gew.-% der Diaminkomponente dem Reaktor schrittweise oder kontinuierlich im Verlauf der Reaktion zugegeben werden.

2. Verfahren nach Anspruch 1, wobei die Diaminkomponente 20 bis 80 Gew.-% des mindestens einen Polyetheramins und 20 bis 80 Gew.-% eines oder mehrerer Diamine, die davon verschieden sind, enthält, wobei zumindest ein Teil davon dem Reaktor nach dem mindestens einen Polyetheramin zugegeben werden.

3. Verfahren nach Anspruch 1 oder 2, wobei die Menge der Polyolkomponente 20 bis 80 Gew.-%, bezogen auf die Summe von Diamin- und Disäurekomponenten und Polyolkomponenten, beträgt.

4. Verfahren nach einem der Ansprüche 1 bis 3, wobei das Polyetheramin durch sich wiederholende Oxyethylen- und/oder Oxypropyleneinheiten im Grundgerüst und durch endständige primäre Aminogruppen gekennzeichnet ist.

5. Verfahren nach einem der Ansprüche 1 bis 4, wobei es sich bei dem Polyol um ein Polyetherol handelt, das aus mindestens einem 2 bis 8 reaktive Wasserstoffatome umfassenden Startermolekül und einem oder mehreren 2 bis 4 Kohlenstoffatome im Alkylenrest aufweisenden Alkylenoxiden hergestellt wird.

6. Verfahren nach einem der Ansprüche 1 bis 5, wobei die Dicarbonsäurekomponente zu Beginn der Reaktion in dem Reaktor bereitgestellt wird.

7. Polyamiddispersion in einem Polyol, erhältlich durch das Verfahren nach einem der Ansprüche 1 bis 6.

8. Polyamiddispersion in einem Polyol, wobei das Polyamid auf Diamin- und Dicarbonsäurekomponenten mit einem Molverhältnis von 1,1:0,9 bis 0,9:1,1 basiert, wobei es sich bei 10 bis 100 Gew.-% der Diaminkomponente um mindestens ein Polyetheramin mit einem zahlenmittleren Molekulargewicht (Mₙ) von 500 bis 5.000 g/mol handelt.

9. Polyamiddispersion nach Anspruch 8, wobei die Polyolkomponente ein zahlenmittleres Molekulargewicht (Mn) von 2.000 bis 8.000 g/mol aufweist.

10. Polyamiddispersion nach einem der Ansprüche 7 bis 9, wobei die Menge der Polyolkomponente 20 bis 80 Gew.-%, bezogen auf die Summe von Diamin- und Disäurekomponenten und Polyolkomponente, beträgt.

11. Verwendung eines Polyetheramins, bei dem es sich um ein difunktionelles primäres Amin mit einem zahlenmittleren Molekulargewicht (Mₙ) von 500 bis 5.000 g/mol handelt, als reaktiver Stabilisator für Polyamide bei der in-situ-Polykondensation von Dicarbonsäuren und Diaminen in einem Polyol.

12. Verwendung einer Polyamiddispersion in Polyol nach einem der Ansprüche 7 bis 10 zur Herstellung eines Polyurethans.

13. Verfahren zur Herstellung eines Polyurethans, umfassend das Mischen einer Polyamiddispersion in Polyol nach einem der Ansprüche 7 bis 10 oder einer durch das Verfahren nach einem der Ansprüche 1 bis 6 hergestellten Polyamiddispersion in Polyol mit Polyisocyanaten und gegebenenfalls einer oder mehreren weiteren Verbindungen mit Wasserstoffatomen, die gegenüber Isocyanaten Kettenverlängerern und/oder Vernetzern, Katalysatoren, Treibmitteln und weiteren Zusatzstoffen reaktiv sind, und das Umsetzen der Mischung zur Bildung des Polyurethans.

14. Verfahren nach Anspruch 13, wobei es sich bei dem Polyurethan um einen Polyurethanschaum handelt und die Mischung Treibmittel umfasst.

15. Polyurethan, erhältlich durch das Verfahren nach Anspruch 13 oder 14.

## Revendications

1. Procédé pour la préparation d'une dispersion de polyamides dans du polyol par réaction de composants diamines et acides dicarboxyliques en un rapport molaire de 1,1:0,9 à 0,9:1,1 dans un composant polyol dans un réacteur, le composant diamines contenant 10 à 100 % en poids d'au moins une polyétheramine qui est une amine primaire difonctionnelle présentant une masse moléculaire moyenne en nombre (Mₙ) de 500 à 5 000 g/mol, le composant polyol présentant une masse moléculaire moyenne en nombre (Mₙ) de 2 000 à 8 000 g/mol, dans lequel au maximum 80 % en poids du composant diamines est introduit dans le réacteur au début de la réaction et au moins 20 % en poids du composant diamines est ajouté par étapes ou en continu au réacteur au cours de la réaction.

2. Procédé selon la revendication 1, dans lequel le composant diamines contient 20 à 80 % en poids de l'au moins une polyétheramine et 20 à 80 % en poids d'une ou plusieurs diamines différentes de celle-ci, dont au moins une partie sont ajoutées au réacteur après l'au moins une polyétheramine.

3. Procédé selon la revendication 1 ou 2, dans lequel la quantité du composant polyol est de 20 à 80 % en poids, par rapport à la somme des composants diamines et diacides et des composants polyols.

4. Procédé selon l'une des revendications 1 à 3, dans lequel la polyétheramine est **caractérisée par** des unités oxyéthylène et/ou oxypropylène répétées dans la chaîne principale et par des groupes amino primaires terminaux.

5. Procédé selon l'une des revendications 1 à 4, dans lequel le polyol est un polyétherol préparé à partir d'au moins une molécule de départ comprenant 2 à 8 atomes d'hydrogène réactifs et d'un ou plusieurs oxydes d'alkylène ayant de 2 à 4 atomes de carbone dans le radical alkylène.

6. Procédé selon l'une des revendications 1 à 5, dans lequel le composant acides dicarboxyliques est introduit dans le réacteur au début de la réaction.

7. Dispersion de polyamides dans un polyol, pouvant être obtenue par le procédé selon l'une des revendications 1 à 6.

8. Dispersion de polyamides dans un polyol, dans laquelle le polyamide est à base de composants diamines et acides dicarboxyliques en un rapport molaire de 1,1:0,9 à 0,9:1,1, 10 à 100 % en poids du composant diamines étant au moins une polyétheramine présentant une masse moléculaire moyenne en nombre (Mₙ) de 500 à 5 000 g/mol.

9. Dispersion de polyamides selon la revendication 8, dans laquelle le composant polyol a une masse moléculaire moyenne en nombre (Mₙ) de 2 000 à 8 000 g/mol.

10. Dispersion de polyamides selon l'une des revendications 7 à 9, dans laquelle la quantité de composant polyol est de 20 à 80 % en poids, par rapport à la somme des composants diamines et diacides et du composant polyol.

11. Utilisation d'une polyétheramine qui est une amine primaire difonctionnelle présentant une masse moléculaire moyenne en nombre (Mₙ) de 500 à 5 000 g/mol, en tant que stabilisant réactif pour des polyamides dans la polycondensation *in situ* d'acides dicarboxyliques et de diamines dans un polyol.

12. Utilisation d'une dispersion de polyamides dans du polyol selon l'une des revendications 7 à 10 pour la préparation d'un polyuréthane.

13. Procédé pour la préparation d'un polyuréthane, comprenant le mélange d'une dispersion de polyamides dans du polyol selon l'une des revendications 7 à 10 ou préparée par le procédé selon l'une des revendications 1 à 6 avec des polyisocyanates et, si c'est approprié, d'autres composés ayant des atomes d'hydrogène qui sont réactifs vis-à-vis des isocyanates, des allongeurs de chaîne et/ou agents de réticulation, des catalyseurs, des agents gonflants et/ou d'autres additifs et la réaction du mélange pour former le polyuréthane.

14. Procédé selon la revendication 13, dans lequel le polyuréthane est une mousse de polyuréthane et le mélange comprend des agents gonflants.

15. Polyuréthane, pouvant être obtenu par le procédé selon les revendications 13 ou 14.
